(19)

Europäisches
Patentamt
European
Patent Office
Office européen
des brevets

(11) **EP 3 958 209 B1**

(12) **EUROPEAN PATENT SPECIFICATION**

(45) Date of publication and mention
of the grant of the patent:
**03.07.2024 Bulletin 2024/27**

(21) Application number: **20191722.6**

(22) Date of filing: **19.08.2020**

(51) International Patent Classification (IPC):
*G06T 7/00* *(2017.01)*   *G06T 7/11* *(2017.01)*

(52) Cooperative Patent Classification (CPC):
**G06T 7/0006; G06T 7/11;** G06T 2207/10072;
G06T 2207/20084; G06T 2207/30108;
G06V 2201/03; Y02E 60/10

(54) **COMPUTER-IMPLEMENTED METHODS, COMPUTING DEVICES AND COMPUTER PROGRAMS FOR PROCESSING VOLUMETRIC SCANNING DATA AND ANALYZING A PERFORMANCE OF STRUCTURAL ELEMENTS**

COMPUTERIMPLEMENTIERTE VERFAHREN, RECHNERVORRICHTUNGEN UND COMPUTERPROGRAMME ZUR VERARBEITUNG VON VOLUMETRISCHEN ABTASTDATEN UND ANALYSE EINER LEISTUNG VON STRUKTURELEMENTEN

PROCÉDÉS MIS EN ŒUVRE PAR ORDINATEUR, DISPOSITIFS ET PROGRAMMES INFORMATIQUES POUR LE TRAITEMENT DE DONNÉES DE BALAYAGE VOLUMÉTRIQUE ET D'ANALYSE DE LA PERFORMANCE D'ÉLÉMENTS STRUCTURELS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.02.2022 Bulletin 2022/08**

(73) Proprietor: **VOLKSWAGEN AG**
**38440 Wolfsburg (DE)**

(72) Inventors:
• **Prohm, Christopher**
**80809 München (DE)**
• **Dzerin, Yury**
**81373 München (DE)**
• **Chávez Göschl, Daniela**
**80804 München (DE)**
• **Rohkohl, Erik**
**38300 Wolfenbüttel (DE)**
• **Kraken, Mathias**
**38116 Braunschweig (DE)**
• **Schönemann, Malte**
**38104 Braunschweig (DE)**

(56) References cited:
JP-A- 2005 228 533

• **DUSAUSSOY N J ET AL: "Image processing for CT-assisted reverse engineering and part characterization", PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US, vol. 3, 23 October 1995 (1995-10-23), pages 33-36, XP010197279, DOI: 10.1109/ICIP.1995.537573 ISBN: 978-0-7803-3122-8**
• **Andrey Dankevich: "Topology and Geometry Basics", , 1 June 2010 (2010-06-01), pages 1-47, XP055770160, Retrieved from the Internet: URL:https://de.slideshare.net/adankevich/cad-topology-and-geometry-basics [retrieved on 2021-01-29]**

**Description**

The present invention relates to a computer-implemented methods, computing devices and computer programs for processing volumetric scanning data and analyzing the performance of structural elements represented by computed tomography scanning data.

The analysis of faults that occur during the fabrication of parts, such as vehicular parts, is a field of research and development. Since many components are housed in a closed casing, a manual analysis of such component's faults might be performed only at the cost of destroying the casing, which may lead to additional faults that have not been present before opening the casing, and may not be applicable for spot-checks being performed during manufacturing. Therefore, in some cases, computed tomography (CT) scans are used for fault analysis, or in more general terms, spot tests during manufacturing.

CT scans usually comprise a plurality of voxels (i.e. three-dimensional pixels). A brightness of the voxels indicates a rate of absorption of the x-rays used for the CT scanning. Different components within the casing usually show different rates of absorption, so they can be distinguished in the CT scans. Based on the CT scans, the inner components of the parts can be analyzed. For example, US patent applications US 2017/0292922 A1 and US 2011/0182495 A1, and Chinese patent application CN109658396A show concepts for analyzing faults in components using CT scans. JP 2005 228533 A1 discloses the use of X-rays to inspect batteries.

Dusaussoy et al: "Image Processing for CT-Assisted Reverse Engineering and Part Characterization" relates to the use of CT systems for part characterization. In said paper, various processing steps being used for processing CT scanning data are described, such as image segmentation, image classification, image topology extraction, raw contour/surface extraction, border refinement, contour/surface segmentation and shape modeling. An example is given, where engineers reverse-engineered a part being used in a nuclear power plant, by recreating part CAD drawings from the CT scanning data.

Andrey Dankevich: "Topology and Geometry Basics" discusses definitions and properties of different geometric figures.

There may be a desire for an improved concept for the analysis of volumetric scanning data with regards to faults in components.

The invention is defined by the subject-matter of the appended claims.

Embodiments of the present disclosure are based on the finding that the analysis of volumetric scanning data, such as Computed Tomography (CT) scanning data, Functional Magnetic Resonance Imaging (FMRI scanning data) or Positron Emission Tomography scanning data, can be improved by extracting the surfaces of the respective components of a structural element, and analyzing the interrelationship of the surfaces to determine the structural integrity of the structural element. Accordingly, voxels of the volumetric scanning data that are part of the bulk (i.e. not at the surface) of a component may be discarded from the analysis. The interrelationship of the surfaces may be analyzed to determine distances between the surfaces, an alignment of surfaces etc. These structural integrity features may be important for the analysis of potential faults in structural elements, such as batteries, where an overlap of cathodes and anodes may be avoided.

Various embodiments of the present disclosure relate to a computer-implemented method for processing volumetric scanning data. The method comprises obtaining volumetric scanning data of a structural element. The structural element comprises a plurality of instances of two or more types of components. The volumetric scanning data is represented by a plurality of voxels. The method comprises assigning the plurality of voxels to one of the two or more different types of components. The method comprises identifying, for each type of component, the voxels that are part of a surface of an instance of the component (at this point, no instantiation has taken place). The method comprises extracting the surfaces of the instances of the components using the voxels that are part of the surface of the respective type of component. The method comprises determining information on a structural integrity of the structural element based on the extracted surfaces. In general, surfaces that show irregularities may be detrimental to the structural integrity of the structural element, and may thus be analyzed to determine the structural integrity of the structural element.

For example, the structural element may be a battery. The two or more different types of components may comprise a cathode and an anode of the battery. In general, in batteries, an overlap of cathodes and anodes may be avoided, and the surfaces of the cathodes and anodes may be analyzed to detect such a potential overlap.

In general, the voxels might either be part of the surface of an instance of the component or part of a bulk of the instance of the component. The method may comprise discarding voxels that are part of the bulk of the instance of the component. The voxels of the bulk may be discarded to reduce the processing power required for analyzing the structural integrity of the structural element.

In various embodiments, the method comprises segmenting the instances of the components based on the extracted surfaces. The information on the structural integrity of the structural element may be determined based on the extracted surfaces of the instances of the components. For example, returning to the example of the structural element being a battery, each cathode and anode layer may be treated as a separate instance of the respective components. The same principle can also be applied to cylindrical batteries.

For example, the information on the structural integrity may be determined based on at least one of a distance between surfaces, an alignment of surfaces, a uniformity of a distance along an extent of two surfaces, an intersection of surfaces of the extracted surfaces, and a difference between the extracted surfaces and a three-dimensional model of the structural element. A distance and/or intersection of surfaces may reveal structural faults within the structural element. A divergence between the three-dimensional model (e.g. a CAD drawing) and the extracted surfaces may also indicate potential faults.

According to the invention, extracting the surfaces of the instances of the components comprises performing local plane fitting for the voxels that are part of the surface of the respective type of component. Local plane fitting may be used to generate a continuous (and smooth) surface from the voxels that are part of the surface of the respective component. For example, the local plane fitting may be used as a plausibility check for the voxels that are part of the surface.

In various embodiments, the voxels are assigned to one of the two or more different types of components using a machine-learning model that is suitable for image segmentation. For example, the voxels may be assigned to one of the two or more different types of components using a machine-learning model that is based on a U-Net architecture. In general, there are various suitable machine-learning frameworks that can be used to perform the respective image segmentation.

In general, it is useful to determine the orientation of the respective surfaces as well, e.g. whether a surface is a top surface or a bottom surface of an instance of a component. The method comprises determining an orientation of the surfaces of the instances of the components, and classifying (e.g. top of bottom) the surfaces of the instances of the components based on the orientation of the respective surfaces. The information on the structural integrity is determined based on the classification of the respective surfaces. For example, the classification may be used to apply an advanced rule-set for the determination of the structural integrity, e.g. "the top surface of an anode may not intersect with a bottom surface of a cathode".

According to the invention, the orientation of the surfaces of the instances of the components are be determined based on a mean position of a bulk of the respective instances of the components (e.g. without requiring instantiation at the point). For example, if the mean position of the bulk is beneath a surface, the surface may be a top surface, and if the mean position of the bulk is above a surface, the surface may be a bottom surface. In some embodiments, only the bulk of the instance the surface is associated with may be considered. In some embodiments, however, the entire bulk of the same type of components may be taken into account.

In various embodiment, the method comprises correlating a performance of the structural component with the information on the structural integrity of the component. The correlation may be used subsequently to determine an estimated performance of a structural element based on its volumetric scanning data.

Various embodiments of the present disclosure relate to a computer-implemented method for determining a correlation between a structural integrity of structural elements and a performance of the structural elements. The method comprises obtaining information on a structural integrity of a plurality of structural elements, the information on the structural integrity being generated using the above-referenced method. The method comprises obtaining information on a performance of the plurality of structural elements. The method comprises determining a correlation between the structural integrity of the plurality of structural elements and the performance of the plurality of structural elements. The correlation may be used to determine an estimated performance of a structural element based on its volumetric scanning data.

Various embodiments of the present disclosure relate to a computing device comprising an interface for exchanging information, and processing circuitry configured to perform the method for processing the volumetric scanning data.

Various embodiments of the present disclosure relate to a computing device comprising an interface for exchanging information, and processing circuitry configured to perform the method for determining the correlation. For example, the computing device may correspond to the above-referenced computing device.

Various embodiments of the present disclosure relate to a computer program having a program code for performing the method for processing the volumetric scanning data and/or the method for determining the correlation, when the computer program is executed on a computer, a processor, or a programmable hardware component.

Some other features or aspects will be described using the following non-limiting embodiments of apparatuses or methods or computer programs or computer program products by way of example only, and with reference to the accompanying figures, in which:

Fig. 1a    shows a flow chart of an embodiment of a computer-implemented method for processing volumetric scanning data;

Fig. 1b    shows a block diagram of an embodiment of a computing device for processing volumetric scanning data;

Fig. 2a    shows a flow chart of an embodiment of a computer-implemented method for determining a correlation;

Fig. 2b    shows a block diagram of an embodiment of a computing device for determining a correlation;

Fig. 3 shows an overview of an overall workflow for analyzing volumetric scanning data;

Fig. 4 shows an overview of processing steps for computing KPIs in an automated way from computer tomography scans;

Fig. 5a illustrates the fitting of a local plane;

Fig. 5b illustrates the determination of an orientation of a surface; and

Fig. 6 shows an illustration of the detection of an overlap between the bulk of two components.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

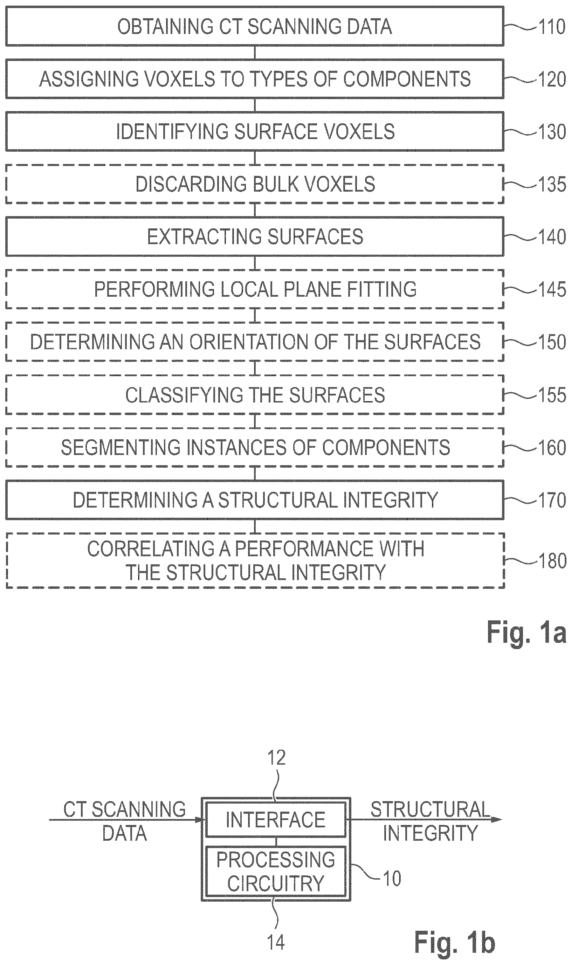

Fig. 1a shows a flow chart of an embodiment of a computer-implemented method for processing volumetric scanning data. The method comprises obtaining 110 volumetric scanning data of a structural element. The structural element comprises a plurality of instances of two or more types of components. The volumetric scanning data is represented by a plurality of voxels. The method comprises assigning 120 the plurality of voxels to one of the two or more different types of components. The method comprises identifying 130, for each type of component, the voxels that are part of a surface of an instance of the component. The method comprises extracting 140 the surfaces of the instances of the components using the voxels that are part of the surface of the respective type of component. The method comprises determining 170 information on a structural integrity of the structural element based on the extracted surfaces.

Fig. 1b shows a block diagram of an embodiment of a corresponding computing device 10 for processing volumetric scanning data. The computing device 10 comprises an interface 12 for exchanging information, e.g. the volumetric scanning data and/or the information non the structural integrity, and processing circuitry 14 that is coupled to the interface 12, and that is configured to perform the method of Fig. 1a. In general, the functionality of the computing device may be provided by the processing circuitry, e.g. conjunction with the interface 12 (for exchanging data) and one or more storage devices (not shown) for storing data (e.g. the volumetric scanning data, the information on the structural integrity, and/or intermediate results).

The following description relates to the computer-implemented method of Fig. 1a as well as to the corresponding computing device of Fig. 1b and computer program.

Various aspects of the present disclosure relate to a computer-implemented method, computing device and computer program for processing volumetric scanning data (i.e. three-dimensional scanning data), such as Computer Tomography (CT) scanning data, Functional Magnetic Resonance Imaging (FMRI scanning data) or Positron Emission Tomography scanning data, of a structural element. As has been mentioned above, the presented concept may be used for fault analysis and/or spot check, and in particular for the determination of a correlation between volumetric scanning data of a structural element and the performance of the structural element. In this context, the structural element may be an object, e.g. a part or component for use in a machine, e.g. a part or component for use in a vehicle. In the context of the present disclosure, the invention is discussed with respect to a battery. In other words, the structural element may be a battery. However, the same concept is also applicable to other structural components, such as multilayer sensors and the like or any structural element comprising components that have surfaces that are arranged in a pre-defined geometry. For example, the structural element may be an electric motor, a hydraulic damper or a fuel cell, with the first two having a cylindrical buildup.

The method comprises obtaining 110 the volumetric scanning data of the structural element. For example, the volumetric scanning data may be obtained via an interface, or from a storage device. For example, the volumetric scanning data may comprise the output of a CT device (i.e. a CT scanner), the output of an FMRI scanner, or the output of a PET scanner. In general, the volumetric scanning data may comprise scanning data from a single scan of the structural element. In some cases, however, multiple scans may be taken,

The structural element comprises a plurality of instances of two or more types of components. In the context of the present disclosure, a distinction is made between a "type" and an "instance" of a component. For example, a battery comprises anodes and cathodes, which are the types of components of the battery. In other words, the two or more different types of components may comprise a cathode and an anode of the battery. Of each component, the structural element may comprise one or more instances. For example, the structural element may comprise a plurality of cathodes (i.e. a plurality of instances of the cathode) and a plurality of anodes (i.e. a plurality of instances of the anode).

In general, the volumetric scanning data is represented by a plurality of voxels. In the context of volumetric scanning data, a voxel is an image point that has a coordinate in three dimensions (in a three-dimensional raster). In CT scanning data, each voxel indicates a brightness of the structural element being scanned at a three-dimensional coordinate. The brightness, in turn, indicates an absorption of the x-rays being used to scan the structural element. In other words, each voxel is characterized by a brightness value that corresponds to the absorption (of x-rays).

The method comprises assigning 120 the plurality of voxels to one of the two or more different types of components. By assigning the plurality of voxels to the different types of components, a first step is taken towards the segmentation of the components being visible in the volumetric scanning data. In general, the voxels may be assigned to one of the two or more different types of components using a machine-learning model that is suitable for image segmentation. In other words, the volumetric scanning data, or a derivative thereof, may be provided at an input of the machine-learning model, and the assignment between the voxels and types of components may be obtained at the output of the machine-learning model. There are various frameworks that are suitable for image segmentation. In general, the machine-learning model may be suitable for image segmentation in 2D, or for image segmentation in 3D. One type of framework that has proven to be suitable is the so-called U-Net framework, which is predominately used for image segmentation in medical applications (on 2D image data). Accordingly, the voxels may be assigned to one of the two or more different types of components using a machine-learning model that is based on a U-Net architecture. More information can be found in an article by Ronneberger et al: "U-Net: Convolutional Networks for Biomedical Image Segmentation" (2015). Alternatively, a machine-learning model for segmentation of volumetric image data may be used, e.g. as used in the biomedical domain. Different types of machine-learning models for segmentation may be suitable, e.g. as long as they assign each voxel to one of a plurality of types/classes.

The method comprises identifying 130, for each type of component, the voxels that are part of a surface of an instance of the component. Once the voxels are assigned to one of the types of components, the surface voxels may be identified. In general, the voxels are either part of the surface of an instance of the component or part of a bulk of the instance of the component. The identification of the surface voxels may be done by comparing, for a given voxel, whether the adjoining voxels belong to the same type of component. If all of the adjoining voxels belong to the same type of component, the voxel may be identified to be a bulk voxel, if not, e.g. if only five of the six adjoining voxels belong to the same type of component, the voxel may be identified as a surface voxel. The method may comprise discarding 135 voxels that are part of the bulk of the instance of the component. For example, in the following, merely the surface voxels, and the surfaces being created by the surface voxels, may be considered.

The method comprises extracting 140 the surfaces of the instances of the components using the voxels that are part of the surface of the respective type of component. In other words, the surfaces of the components may be abstracted from the individual pixels, and transformed into contiguous planes for the subsequent processing. In general, the surface extraction may comprise one or more sub-tasks. For example, the assignment of the voxels to the different component types, and the identification of the voxels that are part of the surface may be considered a sub-task of the surface extraction. Additionally, extracting 140 the surfaces of the instances of the components may comprise performing 145 local plane fitting for the voxels that are part of the surface of the respective type of component. In general, the local plane may be fitted as close as possible to the local surface. This may be done by calculating the local gyration tensor for all surface vectors and identifying the eigenvector and minimum eigenvalue with the plane normal.

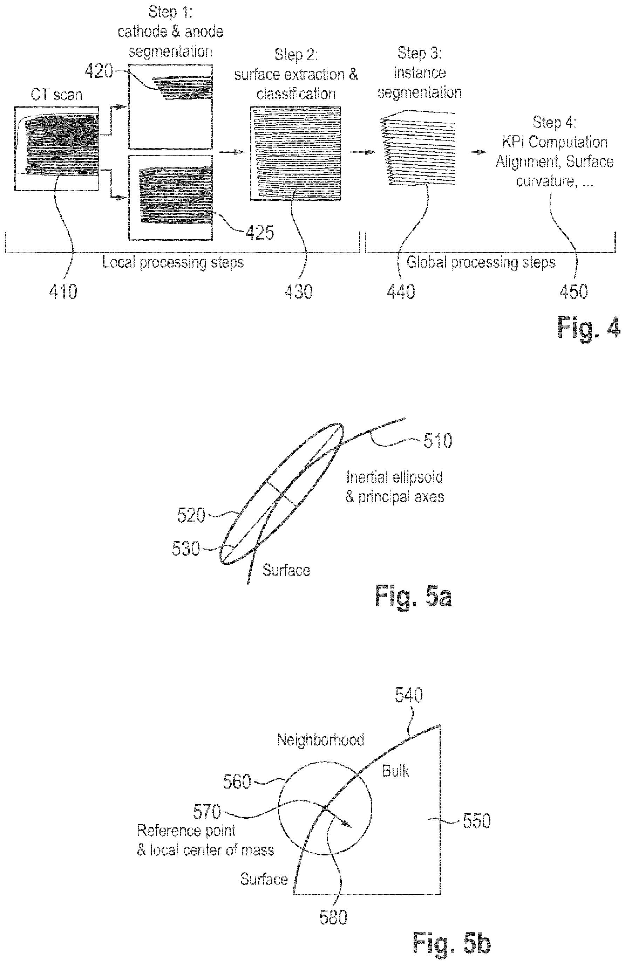

An example for the procedure is given in connection with Fig. 5a. Additionally, the orientation of the surfaces may be determined. In other words, the method may comprise determining 150 an orientation of the surfaces of the instances of the components, and classifying 155 the surfaces of the instances of the components based on the orientation of the respective surfaces (relative to various coordinate system, e.g. relative to a world coordinate system, or perpendicular to a radial direction), e.g. by classifying the surfaces into "top surface", "bottom surface" and "other surface/side surface". For example, the orientation of the surfaces may be determined by considering the position of the surface voxel or surface voxels relative to the bulk voxels. In other words, the orientation of the surfaces of the instances of the components is determined based on a mean position of a bulk of the respective instances of the components. If the bulk voxels are primarily located below the surface, the surface may be a top surface, if the bulk voxels are primarily located above the surface may be a bottom surface. If significant portions of the bulk are found below and above the respective voxels, the surface may be a side surface. Accordingly, the information on the structural integrity may be determined based on the classification of the respective surfaces, e.g. by determining distances between a bottom surface of a first component and a top surface of a second, adjacent component.

In various embodiments, the method further comprises segmenting 160 the instances of the components based on the extracted surfaces. For example, segmenting 160 the instances of the components may comprise identifying contiguous instances of components that are formed by the plurality of voxels having the same type. For example, the orientation of the surface may be taken For example, a component may be formed by all of the voxels having the same type that are directly adjacent to another voxel having the same type. Again, the information on the structural integrity of the structural element may be determined based on the extracted surfaces of the instances of the components.

Once the surfaces of the components have been extracted, and, optionally, the instances of the components have been segmented, the resulting surfaces may be used to determine the information on the structural integrity of the structural element. In other words, the method comprises determining 170 information on a structural integrity of the structural element based on the extracted surfaces. In general, the information on the structural integrity may indicate a compliance of the structural element with an idealized version of the structural element, e.g. with regard to the surfaces of the components. For example, an idealized version of the structural element, e.g. a three-dimensional model of the structural element, may be compared to the extracted surfaces to determine the information on the structural identity. Accordingly, the information on the structural integrity may indicate a deviation of the extracted surfaces from the idealized version of the structural element.

If no such model is available, or in addition to the model, the interrelationship of the surfaces may be analyzed to determine the information on the structural integrity. For example, the determination of the information on the structural integrity may comprise determining distances between the extracted surfaces. Accordingly, the information on the structural integrity may be determined based on at least one of a distance between surfaces (of the extracted surfaces), an alignment of surfaces (of the extracted surfaces), a uniformity of a distance along an extent of two surfaces (of the extracted surfaces), and an intersection of surfaces of the extracted surfaces.

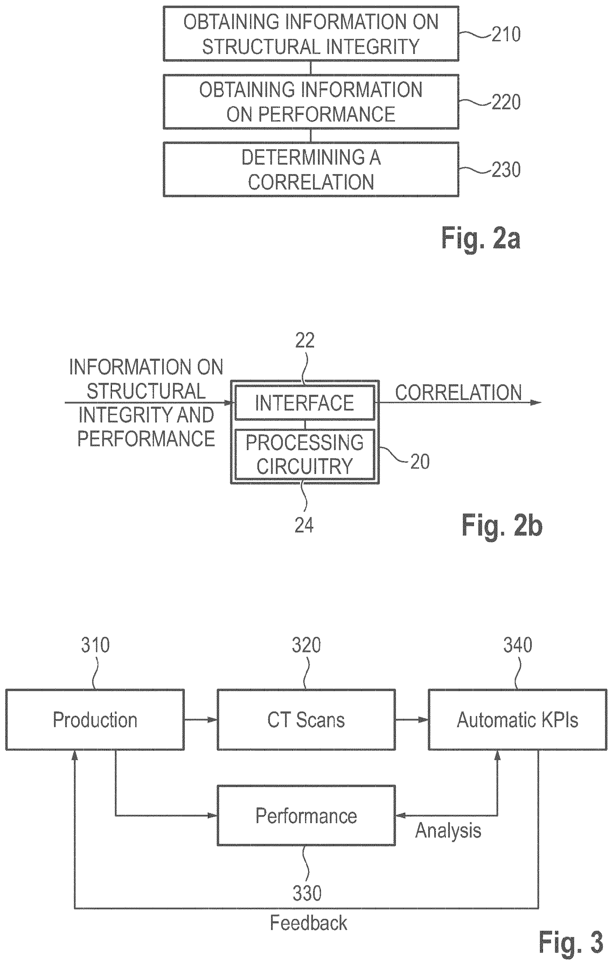

In some embodiments, this information on the structural integrity may be used to determine a correlation between the information on the structural integrity, and a performance of the respective structural element. For example, each structural element may be tested in addition to the CT scanning-based analysis of the structural element. The performance that is determined by the test may be correlated with the information on the structural identity that is determined based on the volumetric scanning data. In other words, the method may comprise correlating 180 a performance of the structural component with the information on the structural integrity of the component. Accordingly, the method may comprise obtaining information on a performance of the structural element. For example, the information on the performance may relate to a structural performance of the structural element, e.g. a pliability of the structural element, or to a functionality of the structural element, e.g. whether the structural element is functional, or how high a key performance indicator, such as an electrical characteristic variable, of the structural element is. Both the determination of the information on the structural integrity and the correlation of the information on the structural integrity with the performance of the structural element may be repeated with other sets of volumetric scanning data, the resulting information on the structural integrity and the corresponding performance, to yield a correlation that is based on a plurality of structural elements (of the same model). The correlation may be suitable for determining a key performance indicator of structural elements based on information on the structural integrity of the respective elements, and by determining the information on the structural integrity from the volumetric scanning data, based on volumetric scanning data representing the structural elements. For example, the correlation may be determined using statistical methods. Alternatively, a machine-learning model may be trained using supervised training, with the information on the structural integrity being used as training input and the respective information on the performance being used as desired output of the training of the machine-learning model. The same determination of the correlation is described, detached from the determination of the information on the structural integrity, in connection with Figs. 2a and 2b.

The interface 12 may correspond to one or more inputs and/or outputs for receiving and/or transmitting information, which may be in digital (bit) values according to a specified code, within a module, between modules or between modules of different entities. For example, the interface 12 may comprise interface circuitry configured to receive and/or transmit information.

In embodiments, the processing circuitry 14 may be implemented using one or more processing units, one or more processing devices, any means for processing, such as a processor, a computer or a programmable hardware component being operable with accordingly adapted software. In other words, the described function of the processing circuitry 14 may as well be implemented in software, which is then executed on one or more programmable hardware components. Such hardware components may comprise a general-purpose processor, a Digital Signal Processor (DSP), a micro-controller, etc.

In at least some embodiments, the computing device 10 may comprise one or more storage devices, e.g. at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the computer-implemented method, computing device and computer program for processing the volumetric scanning data are mentioned in connection with the proposed concept or one or more examples described above or below (e.g. Fig. 2a to 6). The computer-implemented method, computing device and computer program for processing the volumetric scanning data may comprise one or more additional optional features corresponding to one or more aspects of the proposed concept or one or more examples described above or below.

Fig. 2a shows a flow chart of an embodiment of a computer-implemented method for determining a correlation between a structural integrity of structural elements and a performance of the structural elements. The method comprises obtaining 210 information on a structural integrity of a plurality of structural elements. The information on the structural integrity is generated using the method of Fig. 1a, the corresponding computing device of Fig. 1b, or the corresponding computer program. The method comprises obtaining 220 information on a performance of the plurality of structural elements. The method comprises determining 230 a correlation between the structural integrity of the plurality of structural elements and the performance of the plurality of structural elements.

Fig. 2b shows a block diagram of an embodiment of a corresponding computing device 20 for determining the correlation. The computing device 20 comprises an interface 22 for exchanging information, e.g. the information non the structural integrity and/or the information on the performance, and processing circuitry 24 that is coupled to the interface 24 and configured to perform the method of Fig. 2a. In general, the functionality of the computing device may be provided by the processing circuitry, e.g. conjunction with the interface 22 (for exchanging data) and one or more storage devices (not shown) for storing data (e.g. the information on the structural integrity, the information on the performance, the correlation, and/or intermediate results).

As has been mentioned in connection with Figs. 1a and/or 1b, the determination of the correlation may be uncoupled from the generation of the information on the structural integrity. Accordingly, the method comprises obtaining 210 the information on a structural integrity of a plurality of structural elements, by generating the information the structural identity using the method of Fig. 1a, or by obtaining the information from another computing device. The method comprises obtaining 220 the information on the performance of the plurality of structural elements, e.g. from a device having performed a structural or function test of the plurality of structural devices, or from a database. The method comprises determining 230 the correlation between the structural integrity of the plurality of structural elements and the performance of the plurality of structural elements, e.g. similar to the determination of the correlation that has been introduced in connection with Fig. 1a. Accordingly, the correlation may be suitable for determining a key performance indicator of structural elements based on information on the structural integrity of the respective elements.

The interface 22 may correspond to one or more inputs and/or outputs for receiving and/or transmitting information, which may be in digital (bit) values according to a specified code, within a module, between modules or between modules of different entities. For example, the interface 22 may comprise interface circuitry configured to receive and/or transmit information.

In embodiments, the processing circuitry 24 may be implemented using one or more processing units, one or more processing devices, any means for processing, such as a processor, a computer or a programmable hardware component being operable with accordingly adapted software. In other words, the described function of the processing circuitry 24 may as well be implemented in software, which is then executed on one or more programmable hardware components. Such hardware components may comprise a general-purpose processor, a Digital Signal Processor (DSP), a micro-controller, etc.

In at least some embodiments, the computing device 20 may comprise one or more storage devices, e.g. at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the computer-implemented method, computing device and computer program for determining the correlation are mentioned in connection with the proposed concept or one or more examples described above or below (e.g. Fig. 1a to 1b, 3 to 6). The computer-implemented method, computing device and computer program for determining the correlation may comprise one or more additional optional features corresponding to one or more aspects of the proposed concept or one or more examples described above or below.

Various embodiments of the present disclosure relate to robust instance segmentation for automated extraction of key performance indicators from computer tomography scans of structural elements, such as batteries, using computer vision.

The production of batteries, e.g. for electric vehicles, is becoming ever more important. In many battery production plants, however, the relationship between production quality and product performance may not be known. Various embodiments of the present disclosure use a computer tomography system to quantify the product performance. While the general concept of using CT scans for quality control in production systems is known, these known approaches may use different techniques than the approach outlined below. The described approach is generally applicable to any manufacturing process, where non-destructive analysis is to be performed. The presented approach assumes certain symmetries of the product (e.g., layered or circular). The approach may, however, also be applied to structural elements apart from batteries.

The described concept is part of an overall workflow trying to correlate the performance of manufactured parts with the measurements collected during production. With the insights gained from analyzing how performance changes due to production measurements, the overall production can be optimized. Fig. 3 shows an overview of an overall workflow for analyzing volumetric scanning data. The overall workflow may comprise production 310 (of the structural element), the generation of CT scans 320 of the structural element, the determination of the performance 330 of the structural element, and the determination of the automatic KPIs (Key Performance Indicators). The described concept may be used for the block "Automatic KPIs" 340.

The motivating application were battery packs, but the described features can be applied also to other manufacturing processes. In the following an analysis process is described that is improved or optimized to extract information about production quality from computer tomography scans of the part (i.e. structural element), e.g. battery pack, during production.

The basis for the analysis are computed tomography scans, i.e., volumetric images where each voxel is characterized by a brightness value that corresponds to the absorption of x-rays.

Fig. 4 shows an overview of processing steps for computing KPIs in an automated way from computer tomography scans 410. The analysis is split into the following steps. While, in the following, the term "step" is used, the steps may be performed in a different order as well, and one or more steps may be omitted.

1. Part segmentation by type. For batteries, the relevant parts are the battery cathode 420 & anode 425. This step assigns each voxel to be one type of part. Note, that at this step, all voxels may be independent and there might be no information about which voxels form whole objects, e.g. anode sheets. The segmentation may be performed with a neural network-based image segmentation model. In an exemplary implementation, a so-called U-Net architecture was used, that was initially developed for image segmentation in the medical fields.

2. Surface extraction & classification 430. Instead of analyzing the voxels directly, only surface information might be used for increased robustness. In this step, the surface of each class may be extracted, and each voxel assigned to a type of surface, e.g. top or bottom of an anode.

3. Instance segmentation 440. In this step, all connected voxels of a single type may be assumed to be part of the same object, e.g., the top layer of a single anode.

4. Automatic KPI computation 450. Based on the detected objects, key performance indicators that quantify production quality may be calculated (i.e. the structural integrity may be determine). For the example of a battery, that could be alignment of anode sheets or comparison to CAD files that the production was based on.

In the present disclosure, the focus is on step 2. The second step can be further subdivided into the following sub-steps:

2a: Surface extraction. Each voxel may be classified into bulk and surface. Any voxel that has the full number of direct neighbors of the same type (6 in 3D) may be classified as bulk, all other voxels may be classified as surface. For example, an anode voxel with 4 direct neighbors that are also anodes, may be classified to be a surface voxel.

2b: Fitting of a local plane for each surface voxel. Around each surface voxel, a local plane may be fitted that tries to be as close as possible to the local surface. This may be done by computing the local gyration tensor (for all surface voxels)

$$G(i,j,k) \sum_{(u,v,w) \in Surface-Neighbors} \Delta x \Delta x^T$$

and identifying the eigenvector of the minimum eigenvalue with the plane normal.

$$Gv = \lambda_{min} v$$

This vector however is not oriented as it could point into either direction. The squares magnitude of the eigenvector projected onto the main axes may be denoted as local plane parameters. The local plane parameters may be defined as:

$$p_x = (e_x^T v)^2, p_y = \left(e_y^T v\right)^2, p_z = (e_z^T v)^2$$

See also Fig. 5a, which illustrates the fitting of a local plane. Fig. 5a shows the surface 510, the inertial ellipsoid 520 and the principal axes 530.

2c: Orientation of the plane. The correct sign of the normal may be calculated by computing the mean position of the bulk around the surface voxel. For example, if the majority of the bulk is found below the surface voxel, the local surface is the top of the object. For example, the following formulae may be used for calculating the mean bulk position:

$$n^*(i,j,k) = \sum_{(u,v,w) \in Surface-Neighbors} \Delta x$$

$$n(i,j,k) = \frac{1}{|n^*(i,j,k)|} n^*(i,j,k)$$

See also Fig. 5b, where the determination of an orientation of a surface is shown. Fig. 5b shows the surface 540., the bulk 550, the neighborhood 560, the reference point 570 (i.e. the voxel being processed) and the vector 580 towards the local center of mass.

2d: Classification of the surface type based on plane orientation, voxel position, and voxel part type. Next, each surface voxel may be classified by thresholding the local plane parameter and the mean bulk position. For example, the top of an anode sheet would be an anode surface voxel with $p_z > 0.5$ and $n_z > 0$. This approach can further be extended to non-layered geometries, e.g. for cylindrical geometries, each voxel can be classified as either normal or perpendicular to a perfectly aligned cylinder by using the radial vector as the projection target for the local plane parameters. For example, the structural element may be a structural element with a cylindrical construction, such as a cylindrical battery, an electric motor or a hydraulic damper.

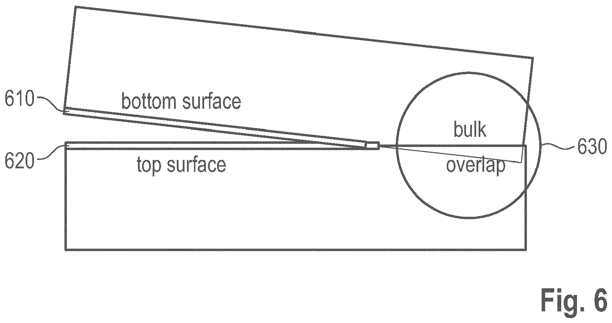

The described approach is tailored, but not limited, to the analysis of volumetric scanning data of batteries and takes the layered geometry of the battery pack into explicit account. Therefore, additional robustness can be observed even for imperfect CT scans. In particular for low resolutions, other approaches to instance segmentation can lead to undesired artifacts due to overlapping sheets. Here, any such situations may be explicitly forbidden, and the corresponding voxels can be filtered out. Fig. 6 shows an illustration of the detection of an overlap between the bulk of two components. Fig. 6 shows the bottom surface 610 of one component, the top surface 620 of another component, and an overlap 630 between the bulk of the two components. Fig. 6 may serve as an illustration of the increased robustness by using surfaces, not volumes to detect objects. Whereas the bulk can have overlaps, the surfaces are never overlapping by construction.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. The invention is defined by the appended claims.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The invention is defined by the appended claims.

It is further to be noted that methods disclosed in the specification or in the claims may be implemented by a device having means for performing each of the respective steps of these methods.

**List of reference signs**

| | |
|---|---|
| 10 | Computing device |
| 12 | Interface |
| 14 | Processing Circuitry |
| 20 | Computer device |
| 22 | Interface |
| 24 | Processing circuitry |
| 110 | Obtaining volumetric scanning data |
| 120 | Assigning voxels to types of components |
| 130 | Identifying surface voxels |
| 135 | Discarding bulk voxels |
| 140 | Extracting surfaces |
| 145 | Performing local plane fitting |
| 150 | Determining an orientation of the surfaces |
| 155 | Classifying the surfaces |
| 160 | Segmenting instances of components |
| 170 | Determining a structural integrity |
| 180 | Correlating a performance with the structural integrity |
| 210 | Obtaining information on a structural integrity |
| 220 | Obtaining information on a performance |
| 230 | Determining a correlation |
| 310 | Production |
| 320 | CT Scans |
| 330 | Performance |
| 340 | Automatic KPIs |
| 410 | CT scan |
| 420 | Cathode and anode separation: Cathodes |
| 425 | Cathode and anode separation: Anodes |
| 430 | Surface extraction and classification |
| 440 | Instance segmentation |
| 450 | KPI computation |
| 510 | Surface |
| 520 | Inertial ellipsoid |
| 530 | Principal axes |
| 540 | Surface |
| 550 | Bulk |
| 560 | Neighborhood |
| 570 | Reference point |
| 580 | Arrow denoting local center of mass |
| 610 | Bottom surface |
| 620 | Top surface |
| 630 | Bulk overlap |

**Claims**

1. A computer-implemented method for processing volumetric scanning data, the method comprising:

   Obtaining (110) Volumetric scanning data of a structural element, the structural element comprising a plurality of instances of two or more types of components, wherein the Volumetric scanning data is represented by a plurality of voxels;
   Assigning (120) the plurality of voxels to one of the two or more different types of components;
   Identifying (130), for each type of component, the voxels that are part of a surface of an instance of the component;
   Extracting (140) the surfaces of the instances of the components using the voxels that are part of the surface of the respective type of component; and
   Determining (170) information on a structural integrity of the structural element based on the extracted surfaces,
   wherein the method further comprises determining (150) an orientation of the surfaces of the instances of the components, and classifying (155) the surfaces of the instances of the components based on the orientation of the respective surfaces, wherein the information on the structural integrity is determined based on the classification of the respective surfaces, **characterized in that** the orientation of the surfaces of the instances of the components is determined based on determining the normal for every voxel by fitting a local plane for each surface voxel, and

determining the sign of the normal based on the mean position of a bulk of the respective instances of the components.

2. The method according to claim 1, wherein the structural element is a battery, wherein the two or more different types of components comprise a cathode and an anode of the battery.

3. The method according to one of the claims 1 or 2, wherein the voxels are either part of the surface of an instance of the component or part of a bulk of the instance of the component, the method comprising discarding (135) voxels that are part of the bulk of the instance of the component.

4. The method according to one of the claims 1 to 3, comprising segmenting (160) the instances of the components based on the extracted surfaces, wherein the information on the structural integrity of the structural element is determined based on the extracted surfaces of the instances of the components.

5. The method according to one of the claims 1 to 4, wherein the information on the structural integrity is determined based on at least one of a distance between surfaces, an alignment of surfaces, a uniformity of a distance along an extent of two surfaces, an intersection of surfaces of the extracted surfaces, and a difference between the extracted surfaces and a three-dimensional model of the structural element.

6. The method according to one of the claims 1 to 5, wherein extracting (140) the surfaces of the instances of the components comprises performing (145) local plane fitting for the voxels that are part of the surface of the respective type of component.

7. The method according to one of the claims 1 to 6, wherein the voxels are assigned to one of the two or more different types of components using a machine-learning model that is suitable for image segmentation.

8. The method according to claim 6, wherein the voxels are assigned to one of the two or more different types of components using a machine-learning model that is based on a U-Net architecture.

9. The method according to one of the claims 1 to 8, comprising correlating (180) a performance of the structural component with the information on the structural integrity of the component.

10. A method for determining a correlation between a structural integrity of structural elements and a performance of the structural elements, the method comprising:

Obtaining (210) information on a structural integrity of a plurality of structural elements, the information on the structural integrity being generated using the method according to one of the claims 1 to 9;
Obtaining (220) information on a performance of the plurality of structural elements; and
Determining (230) a correlation between the structural integrity of the plurality of structural elements and the performance of the plurality of structural elements.

11. A computing device (10) comprising:

an interface (12) for exchanging information; and
processing circuitry (14) configured to perform the method of one of the claims 1 to 9.

12. A computing device (20) comprising:

an interface (22) for exchanging information; and
processing circuitry (24) configured to perform the method of claim 10.

13. A computer program having a program code for performing the method of one of the claims 1 to 9 or the method of claim 10, when the computer program is executed on a computer, a processor, or a programmable hardware component.

**Patentansprüche**

1. Computerimplementiertes Verfahren zum Verarbeiten volumetrischer Scandaten, das Verfahren umfassend:

Erhalten (110) volumetrischer Scandaten eines strukturellen Elements, das strukturelle Element umfassend eine Vielzahl von Instanzen von zwei oder mehr Komponentenarten, wobei die volumetrischen Scandaten durch eine Vielzahl von Voxeln dargestellt werden;
Zuordnen (120) der Vielzahl von Voxeln zu einem der zwei oder mehr unterschiedlichen Komponentenarten;
Identifizieren (130), für jede Komponentenart, der Voxel, die Teil einer Oberfläche einer Instanz der Komponente sind;
Extrahieren (140) der Oberflächen der Instanzen der Komponenten unter Verwendung der Voxel, die Teil der Oberfläche der jeweiligen Komponentenart sind; und
Bestimmen (170) von Informationen über eine strukturelle Integrität des strukturellen Elements basierend auf den extrahierten Oberflächen, wobei das Verfahren ferner umfasst Bestimmen (150) einer Orientierung der Oberflächen der Instanzen der Komponenten und Klassifizieren (155) der Oberflächen der Instanzen der Komponenten basierend auf der Orientierung der jeweiligen Oberflächen, wobei die Informationen über die strukturelle Integrität basierend auf der Klassifizierung der jeweiligen Oberflächen bestimmt werden,

**dadurch gekennzeichnet, dass** die Orientierung der Oberflächen der Instanzen der Komponenten bestimmt wird basierend auf

dem Bestimmen der Normalen für jedes Voxel durch Anpassen einer lokalen Ebene für jedes Oberflächenvoxel und

dem Bestimmen des Vorzeichens der Normalen basierend auf der mittleren Position einer Masse der jeweiligen Instanzen der Komponenten.

2. Verfahren nach Anspruch 1, wobei das strukturelle Element eine Batterie ist, wobei die zwei oder mehr unterschiedlichen Komponentenarten eine Kathode und eine Anode der Batterie umfassen.

3. Verfahren nach einem der Ansprüche 1 oder 2, wobei die Voxel entweder Teil der Oberfläche einer Instanz der Komponente oder Teil einer Masse der Instanz der Komponente sind, das Verfahren umfassend ein Verwerfen (135) von Voxeln, die Teil der Masse der Instanz der Komponente sind.

4. Verfahren nach einem der Ansprüche 1 bis 3, umfassend ein Segmentieren (160) der Instanzen der Komponenten basierend auf den extrahierten Oberflächen, wobei die Informationen über die strukturelle Integrität des strukturellen Elements basierend auf den extrahierten Oberflächen der Instanzen der Komponenten bestimmt werden.

5. Verfahren nach einem der Ansprüche 1 bis 4, wobei die Informationen über die strukturelle Integrität basierend auf mindestens einem von einem Abstand zwischen Oberflächen, einer Ausrichtung von Oberflächen, einer Gleichmäßigkeit eines Abstands entlang einer Ausdehnung von zwei Oberflächen, einer Schnittmenge von Oberflächen der extrahierten Oberflächen und einem Unterschied zwischen den extrahierten Oberflächen und einem dreidimensionalen Modell des strukturellen Elements bestimmt werden.

6. Verfahren nach einem der Ansprüche 1 bis 5, wobei das Extrahieren (140) der Oberflächen der Instanzen der Komponenten ein Durchführen (145) des Anpassens der lokalen Ebene für die Voxel, die Teil der Oberfläche der jeweiligen Komponentenart sind, umfasst.

7. Verfahren nach einem der Ansprüche 1 bis 6, wobei die Voxel zu einem der zwei oder mehr unterschiedlichen Komponentenarten unter Verwendung eines Maschinenlernmodells, das für eine Bildsegmentierung geeignet ist, zugeordnet werden.

8. Verfahren nach Anspruch 6, wobei die Voxel zu einem der zwei oder mehr unterschiedlichen Komponentenarten unter Verwendung eines Maschinenlernmodells, das auf einer U-Net-Architektur basiert, zugeordnet werden.

9. Verfahren nach einem der Ansprüche 1 bis 8, umfassend ein Korrelieren (180) einer Leistungsfähigkeit der strukturellen Komponente mit den Informationen über die strukturelle Integrität der Komponente.

10. Verfahren zum Bestimmen einer Korrelation zwischen einer strukturellen Integrität von strukturellen Elementen und einer Leistungsfähigkeit der strukturellen Elemente, das Verfahren umfassend:

Erhalten (210) von Informationen über eine strukturelle Integrität einer Vielzahl von strukturellen Elementen, wobei die Informationen über die strukturelle Integrität unter Verwendung des Verfahrens nach einem der Ansprüche 1 bis 9 erzeugt werden;
Erhalten (220) von Informationen über eine Leistungsfähigkeit der Vielzahl von strukturellen Elementen; und
Bestimmen (230) einer Korrelation zwischen der strukturellen Integrität der Vielzahl von strukturellen Elementen und der Leistungsfähigkeit der Vielzahl von strukturellen Elementen.

11. Rechenvorrichtung (10), umfassend:

eine Schnittstelle (12) zum Austauschen von Informationen; und
Verarbeitungsschaltlogik (14), die konfiguriert ist, um das Verfahren nach einem der Ansprüche 1 bis 9 durchzuführen.

12. Rechenvorrichtung (20), umfassend:

eine Schnittstelle (22) zum Austauschen von Informationen; und
Verarbeitungsschaltlogik (24), die konfiguriert ist, um das Verfahren nach Anspruch 10 durchzuführen.

13. Computerprogramm, das einen Programmcode zum Durchführen des Verfahrens nach einem der Ansprüche 1 bis 9 oder des Verfahrens nach Anspruch 10 aufweist, wenn das Computerprogramm auf einem Computer, einem Prozessor oder einer programmierbaren Hardwarekomponente ausgeführt wird.

**Revendications**

1. Procédé mis en oeuvre par ordinateur permettant de traiter des données de balayage volumétrique, le procédé comprenant :

> l'obtention (110) de données de balayage volumétrique d'un élément structural, l'élément structural comprenant une pluralité d'instances de deux types de composants ou plus, dans lequel les données de balayage volumétrique sont représentées par une pluralité de voxels ;
> l'affectation (120) de la pluralité de voxels à l'un des deux types de composants différents ou plus ;
> l'identification (130), pour chaque type de composant, des voxels qui font partie de la surface d'une instance du composant ;
> l'extraction (140) des surfaces des instances des composants à l'aide des voxels qui font partie de la surface du type de composant respectif ; et
> la détermination (170) d'informations sur une intégrité structurale de l'élément structural sur la base des surfaces extraites,
> dans lequel le procédé comprend en outre
> la détermination (150) d'une orientation des surfaces des instances des composants, et
> la classification (155) des surfaces des instances des composants sur la base de l'orientation des surfaces respectives, dans lequel les informations sur l'intégrité structurale sont déterminées sur la base de la classification des surfaces respectives,
> **caractérisé en ce que** l'orientation des surfaces des instances des composants est déterminée sur la base de
> la détermination de la normale pour chaque voxel en ajustant un plan local pour chaque voxel de surface, et
> la détermination du signe de la normale sur la base de la position moyenne d'une majeure partie des instances respectives des composants.

2. Procédé selon la revendication 1, dans lequel l'élément structural est une batterie, dans lequel les deux types de composants différents ou plus comprennent une cathode et une anode de la batterie.

3. Procédé selon l'une des revendications 1 ou 2, dans lequel les voxels font soit partie de la surface d'une instance du composant, soit partie d'une majeure partie de l'instance du composant, le procédé comprenant l'élimination (135) de voxels qui font partie de la majeure partie de l'instance du composant.

4. Procédé selon l'une des revendications 1 à 3, comprenant la segmentation (160) des instances des composants sur la base des surfaces extraites, dans lequel les informations sur l'intégrité structurale de l'élément structural sont déterminées sur la base des surfaces extraites des instances des composants.

5. Procédé selon l'une des revendications 1 à 4, dans lequel les informations sur l'intégrité structurale sont déterminées sur la base d'au moins l'un parmi une distance entre des surfaces, un alignement de surfaces, une uniformité d'une distance le long d'une étendue de deux surfaces, une intersection de surfaces des surfaces extraites, et une différence entre les surfaces extraites et un modèle tridimensionnel de l'élément structural.

6. Procédé selon l'une des revendications 1 à 5, dans lequel l'extraction (140) des surfaces des instances des composants comprend la réalisation (145) d'un ajustement du plan local pour les voxels qui font partie de la surface du type de composant respectif.

7. Procédé selon l'une des revendications 1 à 6, dans lequel les voxels sont affectés à l'un des deux types de composants différents ou plus à l'aide d'un modèle d'apprentissage automatique qui est approprié pour la segmentation d'images.

8. Procédé selon la revendication 6, dans lequel les voxels sont affectés à l'un des deux types de composants différents ou plus à l'aide d'un modèle d'apprentissage automatique qui est basé sur une architecture U-Net.

9. Procédé selon l'une des revendications 1 à 8, comprenant la corrélation (180) d'une performance du composant structural avec les informations sur l'intégrité structurale du composant.

10. Procédé de détermination d'une corrélation entre une intégrité structurale d'éléments structuraux et une performance des éléments structuraux, le procédé comprenant :

> l'obtention (210) d'informations sur une intégrité structurale d'une pluralité d'éléments structuraux, les informations sur l'intégrité structurale étant générées à l'aide du procédé selon l'une des revendications 1 à 9 ;
> l'obtention (220) d'informations sur une performance de la pluralité d'éléments structuraux ; et
> la détermination (230) d'une corrélation entre l'intégrité structurale de la pluralité d'éléments structuraux et la performance de la pluralité d'éléments structuraux.

11. Dispositif informatique (10) comprenant :

une interface (12) pour l'échange d'informations ; et
une circuiterie de traitement (14) configurée pour réaliser le procédé selon l'une des revendications 1 à 9.

12. Dispositif informatique (20) comprenant :

une interface (22) pour l'échange d'informations ; et
une circuiterie de traitement (24) configurée pour réaliser le procédé selon la revendication 10.

13. Programme d'ordinateur comportant un code de programme pour réaliser le procédé selon l'une des revendications 1 à 9 ou le procédé selon la revendication 10, lorsque le programme d'ordinateur est exécuté sur un ordinateur, un processeur, ou un composant matériel programmable.

| OBTAINING CT SCANNING DATA | 110 |

| ASSIGNING VOXELS TO TYPES OF COMPONENTS | 120 |

| IDENTIFYING SURFACE VOXELS | 130 |

| DISCARDING BULK VOXELS | 135 |

| EXTRACTING SURFACES | 140 |

| PERFORMING LOCAL PLANE FITTING | 145 |

| DETERMINING AN ORIENTATION OF THE SURFACES | 150 |

| CLASSIFYING THE SURFACES | 155 |

| SEGMENTING INSTANCES OF COMPONENTS | 160 |

| DETERMINING A STRUCTURAL INTEGRITY | 170 |

| CORRELATING A PERFORMANCE WITH THE STRUCTURAL INTEGRITY | 180 |

**Fig. 1a**

CT SCANNING DATA → 12 INTERFACE → STRUCTURAL INTEGRITY

PROCESSING CIRCUITRY — 10

14

**Fig. 1b**

```
┌─────────────────────────────────┐
│ OBTAINING INFORMATION ON        │
│ STRUCTURAL INTEGRITY            │ ─── 210
└─────────────────────────────────┘
                │
┌─────────────────────────────────┐
│ OBTAINING INFORMATION           │
│ ON PERFORMANCE                  │ ─── 220
└─────────────────────────────────┘
                │
┌─────────────────────────────────┐
│ DETERMINING A                   │
│ CORRELATION                     │ ─── 230
└─────────────────────────────────┘
```

**Fig. 2a**

**Fig. 2b**

**Fig. 3**

Fig. 4

Fig. 5a

Fig. 5b

610 — bottom surface

620 — top surface

bulk

overlap

— 630

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170292922 A1
- US 20110182495 A1
- CN 109658396 A
- JP 2005228533 A

**Non-patent literature cited in the description**

- **DUSAUSSOY et al.** *Image Processing for CT-Assisted Reverse Engineering and Part Characterization*
- **RONNEBERGER et al.** *U-Net: Convolutional Networks for Biomedical Image Segmentation,* 2015